Europäisches Patentamt

European Patent Office

Office européen des brevets

(11) Publication number: 0 319 083
A2

# (12) EUROPEAN PATENT APPLICATION

(21) Application number: 88202658.6

(22) Date of filing: 23.11.88

(51) Int. Cl.⁴: C08G 67/02 , B01J 31/00

(30) Priority: 30.11.87 NL 8702862

(43) Date of publication of application:
07.06.89 Bulletin 89/23

(84) Designated Contracting States:
BE CH DE ES FR GB IT LI NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Van Broekhoven, Johannes
Adrianus Maria
Badhuisweg 3
NL-1031 CM Amsterdam(NL)
Inventor: Wife, Richard Lewin
Badhuisweg 3
NL-1031 CM Amsterdam(NL)

(74) Representative: Aalbers, Onno et al
P.O. Box 302
NL-2501 CH The Hague(NL)

(54) Polyketone polymer preparation.

(57) Polyketone polymers are prepared by polymerizing a mixture of carbon monoxide and alpha-olefin(s) in the presence of a catalyst composition on the basis of a palladium compound, an anion of an acid with a pKa of less than 6, and a phosphorus bidentate ligand of general formula $R^1R^2P-R-PR^3R^4$, wherein $R^1$ to $R^4$ are the same or different ortho-polar substituted aryl groups, and where the olefin/CO partial pressure ratio lies between 1 and 4.

EP 0 319 083 A2

# POLYKETONE POLYMER PREPARATION

The invention relates to a process for the preparation of polymers of carbon monoxide with one or more olefinically unsaturated hydrocarbons, also known as polyketones.

From Applicant's European Patent Application No. 246674 a process for preparing polymers is known, wherein a mixture of carbon monoxide and ethene is polymerized at an overall pressure of between 75 and 250 bar and an ethene/carbon monoxide partial pressure ratio of between 0.75 and 3 by using a catalyst composition based upon

a) a palladium compound,

b) an anion of an acid with a pKa of less than 2, except halides, and

c) a bidentate ligand of the general formula $R^1 R^2$-M-R-M-$R^3 R^4$, wherein M represents phosphorus, arsenic or antimony, $R_1$, $R_2$, $R^3$ and $R^4$ represent hydrocarbyl groups which may or may not be substituted with polar groups and R represents a bivalent organic bridging group which contains at least two carbon atoms in the bridge.

Examples of suitable bidentate ligands are 1,3-bis(di-4-tolylphosphino)propane and 1,3-bis(bis(4-methoxyphenylphosphino))propane. Especially suitable are 1,3-bis(diphenylphosphino)propane and 2-methyl-2-(diphenylphosphinomethyl)-1,3-bis(diphenylphosphino)propane.

Components c) wherein M is phosphorus, wherein the groups $R^1$, $R^2$, $R^3$ and $R^4$ are phenyl groups or substituted phenyl groups and wherein the bivalent organic bridging group R contains three carbon atoms in the bridge, are preferred.

In the polymer preparation mentioned hereinbefore, both reaction rates and molecular weights of the polymers formed play an important role. On the one hand, it is desirable that the reaction rates achieved in the polymer preparation be as high as possible and on the other hand, the polymers will have a higher value with a view to their eventual uses as their molecular weights are higher. Both reaction rates and molecular weights can be influenced by the temperature applied during polymerization. Unfortunately, the effects which the temperature has on the reaction rates and on the molecular weights are opposed to one another, in that, at otherwise similar reaction conditions, an increase in reaction temperature leads to increased reaction rates but decreased molecular weights of the polymers obtained. In actual practice, the trend is to conduct the polymerization at such a temperature that the polymers obtained have molecular weights which are sufficiently high for their intended uses and to accept the reaction rates that go with that temperature.

The Applicant has done further research into the execution of the polymerization by using the above-mentioned catalyst compositions to see whether it is possible to influence the reaction rates and/or molecular weights of the polymers prepared by selecting bidentate ligands containing specific substituted phenylphosphino groups and by varying the overall pressures and the olefin/carbon monoxide partial pressure ratios. For the overall pressure it was found that the higher it was chosen, the higher were the reaction rates and the molecular weights obtained. The influence of variations in the olefin/carbon monoxide partial pressure ratios on reaction rates and/or molecular weights was found to be largely dependent on the overall pressure employed during polymerization, as well as on the type of bisphosphine present in the catalyst compositions.

When the polymerization was carried out at an overall pressure below 75 bar and by using a catalyst composition containing a bisphosphine as exemplified in EP-246674, a change in the olefin/carbon monoxide partial pressure ratio was not seen to lead to any significant change in reaction rate and molecular weight.

Neither did a change in the olefin/carbon monoxide partial pressure ratio generally lead to any significant change in reaction rate when the polymerization was carried out at an overall pressure higher than 75 bar and by using a catalyst composition containing one of the bisphosphine ligands illustrated in said EP-specification. It was, however, seen that under these conditions the olefin/carbon monoxide partial pressure ratio has a great influence on the molecular weights of the polymers obtained, in that polymers have considerably higher molecular weights when the polymerization is carried out at an olefin/carbon monoxide partial pressure ratio in the range of from 0.75 to 3, as compared with polymers prepared at the same temperature and overall pressure but at an olefin/carbon monoxide partial pressure ratio which lies outside this range.

Surprisingly, it has now been found that the simultaneous application of two measures, namely the choice of a special, novel type of ligands and the choice of olefin/carbon monoxide ratios of from 1 to 4, allows to carry out the polymerization reaction without the limitations imposed according to EP-246674, whereas the reaction rates or the molecular weights attained are increased with respect to the known processes (provided all other conditions are kept equal). The novel type of ligands is characterized by the nature of their aryl groups $R^1$ to $R^4$, of which each one should contain one or more polar substituents, of which polar substituents at least one per aryl group occupies a position ortho in respect to the phosphorus atom to which the aryl group concerned is bound.

Accordingly, the present invention relates to a process for the preparation of polyketone polymers, wherein a mixture of carbon monoxide with one or more alpha-olefins is polymerized at an olefin/carbon monoxide partial pressure ratio of from 1 to 4, by using a catalyst composition on the basis of

    a) a palladium compound,

    b) an anion of an acid with a pKa of less than 6, and

    c) a phosphorus bidentate ligand of the general formula $R^1 R^2 P\text{-}R\text{-}PR^3 R^4$, wherein $R^1$, $R^2$, $R^3$ and $R^4$ represent the same or different polar-substituted aryl groups, and R represents a bivalent organic bridging group containing three atoms in the bridge at least two of which are carbon atoms, characterized in that each of the aryl groups $R^1$ to $R^4$ contains at least one polar substituent in a position ortho to the phosphorus atom bound to the aryl group concerned, and in that the polymerization is carried out at an olefin/carbon monoxide partial pressure ratio of from 1 to 4,
wherein the subject matter of EP-246674 is disclaimed.

The patent application further relates to certain catalyst compositions containing a bisphosphine as claimed for component c), as novel compositions.

The process according to the invention is preferably carried out at an overall pressure of from 20 to 150 bar and in particular of from 30 to 100 bar. For economic reasons, overall pressures below 75 bar will mainly be employed. The olefin/carbon monoxide partial pressure ratio applied preferably lies between 1.5 and 3.5 and in particular between 2 and 3. The polymerization is preferably carried out at a temperature of from 40 to 120° C and in particular of from 50 and 100° C. Further, it is preferred to carry out the polymerization in a diluent in which the polymers are insoluble or virtually insoluble. Very suitable dilents are lower alcohols and in particular methanol. In the process of the invention, such a quantity of catalyst composition is preferably used per mol of olefin to be polymerized as to contain from $10^{-7}$ to $10^{-3}$ and in particular from $10^{-6}$ to $10^{-4}$ gram atom of palladium. The polymerization of the invention may be carried out either batchwise or continuously.

The palladium compound used in the catalyst composition as component a) is preferably a palladium salt of a carboxylic acid and in particular palladium acetate. The component b) preferably used in the catalyst compositions is an anion of an acid with a pKa of less than 4 (determined in aqueous solution at 18° C) and in particular an anion of an acid with a pKa of less than 2. Examples of suitable acids are sulphuric acid, perchloric acid, sulphonic acids, such as methane sulphonic acid, trifluoromethane sulphonic acid and para-toluenesulphonic acid, and carboxylic acids, such as trichloroacetic acid, difluoroacetic acid and trifluoroacetic acid. Preference is given to trifluoroacetic acid. In addition to the afore-mentioned acid, the following may also be suitably used in the catalyst compositions as components b): 2,4,6-trimethylbenzenesulphonic acid, 2,4,5-trichlorobenzenesulphonic acid, 2,6-dihydroxybenzoic acid, methanedisulphonic acid and sulphoacetic acid. Catalyst compositions containing a palladium compound as component a), a bisphosphine as defined hereinbefore as component c) and one of the five last-mentioned acids as component b), are novel compositions. Component b) is preferably present in the catalyst compositions in a quantity of from 0.5 to 50 and in particular of from 1 to 25 mol per gram atom of palladium. Component b) may be taken up in the catalyst compositions either in the form of an acid or as a salt. Eligible salts include non-noble transition metal salts. When a salt of a non-noble transition metal is used as component b), preference is given to a copper salt. If desired, components a) and b) may be used combined in a single compound. An example of such a compound is palladium para-tosylate.

In the bisphosphines of the general formula $R^1 R^2 P\text{-}R\text{-}PR^3 R^4$ which may be suitably used in the catalyst compositions as components c), the polar-substituted aryl groups $R^1$, $R^2$, $R^3$ and $R^4$ are preferably polar-substituted phenyl groups. As polar substituents that may occur in the groups $R^1$, $R^2$, $R^3$ and $R^4$ may be mentioned, i.a., alkoxy groups, such as methoxy groups, and thioalkyl groups, such as thiomethyl groups. In the catalyst compositions, it is preferred to employ bisphosphines in which the groups $R^1$, $R^2$ $R^3$ and $R^4$ are the same. Preference is further given to bisphosphines in which the polar substituents present in the groups $R^1$, $R^2$, $R^3$ and $R^4$ are alkoxy groups and in particular methoxy groups. As for the bridging groups R present in the bisphosphines, preference is given to bridging groups containing three atoms in the bridge, at least two of which are carbon atoms. Examples of suitable bridging groups R are the $-CH_2\text{-}CH_2\text{-}CH_2\text{-}$group, the $-CH_2\text{-}C(CH_3)_2\text{-}CH_2\text{-}$group and the $-CH_2\text{-}Si(CH_3)_2\text{-}CH_2\text{-}$group. Bisphosphines that can be

3

very suitably used as components c) in the catalyst compositions are
1,3-bis[bis(2-methoxyphenyl)phosphino]propane,
1,3-bis[bis(2,4-dimethoxyphenyl)phosphino]propane,
1,3-bis[bis(2,6-dimethoxyphenyl)phosphino]propane, and
1,3-bis[bis(2,4,6-trimethoxyphenyl)phosphino]propane.

In the process of the invention, special preference is given to the use of catalyst compositions containing 1,3-bis[bis(2-methoxyphenyl)phosphino]propane as component c). By preference, the bisphosphines are employed in the catalyst compositions in a quantity of from 0.5 to 2 and in particular of from 0.75 to 1.5 mol per gram atom of palladium.

In order to enhance the activities of the catalyst compositions, a 1,4-quinone may be incorporated as a component d). 1,4-benzoquinones and 1,4-naphthoquinones have proven very suitable for the purpose. Preferably, the amount of 1,4-quinone used is 5-5000 and in particular 10-1000 mol per gram atom of palladium.

The alpha-olefins used in the process of the invention preferably contain at most 10 carbon atoms per molecule. Examples of suitable alpha-olefins are ethene, propene, butene-1, hexene-1, and octene-1. The process of the invention is particularly important for its use in the preparation of copolymers of carbon monoxide with ethene and in the preparation of terpolymers of carbon monoxide with ethene and another alpha-olefin, in particular propene.

As a rule, the polymers prepared by the invention will exhibit higher intrinsic viscosities according as their molecular weights are higher. For the determination of the intrinsic viscosity of a polymer prepared according to the invention, four solutions are first of all prepared by dissolving the polymer in four different concentrations at 60°C in m-cresol. For each of these solutions, the viscosity is measured in a viscometer at 60°C relative to m-cresol at 60°C. If $T_o$ represents the outflow time of m-cresol and $T_p$ the outflow time of the polymer solution, the relative viscosity ($\eta_{rel}$) is obtained from

$$\eta_{rel} = \frac{T_o}{T_p}.$$

From $\eta_{rel}$ can be calculated the inherent viscosity ($\eta_{inh}$) according to the formula

$$\eta_{inh} = \frac{\ln \eta_{rel}}{c},$$

wherein c represents the concentration of the polymer in grams per 100 ml of solution. By plotting graphically the $\eta_{inh}$ found for each of the four polymer solutions against the corresponding concentration (c) and then by extrapolating to c=0, the intrinsic viscosity [$\eta$] in dl/g is found. Instead of "intrinsic viscosity", this patent application will henceforth use the term recommended by the International Union of Pure and Applied Chemistry, viz. "Limiting Viscosity Number" (LVN).

The invention will now be illustrated with the aid of the following examples.

Example 1

A carbon monoxide/ethene copolymer was prepared as follows. A mechanically stirred autoclave with a volume of 300 ml was charged with 150 ml of methanol. After the contents of the autoclave were brought to 85°C, ethene and carbon monoxide were introduced in such quantities that the ethene partial pressure was 28.5 and the carbon monoxide partial pressure was 11.5 bar. Subsequently, a catalyst solution was introduced into the autoclave which comprised
4.5 ml methanol,
1.5 ml toluene,
0.01 mmol palladium acetate,
0.2 mmol trifluoroacetic acid, and
0.012 mmol 1,3-bis[bis(2-methoxyphenyl)phosphino]propane.

The pressure inside the autoclave was maintained by pressing in a 1:1 carbon monoxide/ethene mixture. After 2 hours, the polymerization was terminated by cooling the reaction mixture to room temperature and releasing the pressure. The copolymer was filtered off, washed with methanol and dried at 70° C.

The yield was 19.2 g of copolymer. The polymerization rate was 10.2 kg copolymer/g palladium.hour. The copolymer had an LVN of 1.5 dl/g.

Example 2

A carbon monoxide/ethene copolymer was prepared substantially in the same way as the copolymer of Example 1, except that the reaction temperature was 75° C instead of 85° C.

The yield was 15.7 g of copolymer. The polymerization rate was 8.3 kg copolymer/g palladium.hour. The copolymer had an LVN of 3.0 dl/g.

Example 3

A carbon monoxide/ethene copolymer was prepared substantially in the same way as the copolymer of Example 1, the differences being
a) the reaction temperature was 70° C instead of 85° C, and
b) such quantities of ethene and carbon monoxide were pressed into the autoclave that the ethene partial pressure was 57 bar and the carbon monoxide partial pressure was 23 bar.

The yield was 15.3 g of copolymer. The polymerization rate was 8.1 kg copolymer/g palladium.hour. The copolymer had an LVN of 6.0 dl/g.

Example 4

A carbon monoxide/ethene copolymer was prepared substantially in the same way as the copolymer of Example 1, the differences being
a) the reaction temperature was 90° C instead of 85° C,
b) such quantities of ethene and carbon monoxide were pressed into the autoclave that the ethene partial pressure was 57 bar and the carbon monoxide partial pressure was 23 bar, and
c) the reaction time was 1 hour instead of 2 hours.

The yield was 22.5 g of copolymer. The polymerization rate was 23.8 kg copolymer/g palladium.hour. The copolymer had an LVN of 2.0 dl/g.

Example 5

A carbon monoxide/ethene/propene terpolymer was prepared substantially in the same way as the copolymer of Example 1, the differences being
a) such quantities of ethene, propene and carbon monoxide were pressed into the autoclave that the ethene partial pressure was 20 bar, the propene partial pressure was 13.5 bar, and the carbon monoxide partial pressure was 22.5 bar, and
b) the reaction time was 3 hours instead of 2 hours.

The yield was 17.5 g of terpolymer. The polymerization rate was 6.2 kg terpolymer/g palladium.hour. The terpolymer had an LVN of 1.1 dl/g.

Example 6

A carbon monoxide/ethene/propene terpolymer was prepared substantially in the same way as the copolymer of Example 1, the differences being

a) the reaction temperature was 75°C instead of 85°C,

b) such quantities of ethene, propene and carbon monoxide were pressed into the autoclave that the ethene partial pressure was 34 bar, the propene partial pressure was 23 bar, and the carbon monoxide partial pressure was 23 bar, and

c) the reaction time was 3 hours instead of 2 hours.

The yield was 15.6 g of terpolymer. The polymerization rate was 5.5 kg terpolymer/g palladium.hour. The terpolymer had an LVN of 2.6 dl/g.

## Example 7

A carbon monoxide/ethene copolymer was prepared as follows. A mechanically stirred autoclave with a volume of 300 ml was charged with 200 ml of methanol. After the contents of the autoclave were brought to 90°C, ethene and carbon monoxide were introduced in such quantities that the ethene partial pressure was 39 and the carbon monoxide partial pressure were 16 bar. Subsequently, a catalyst solution was introduced into the autoclave which comprised

23.5 ml methanol,

1.5 ml toluene,

0.01 mmol palladium acetate,

0.027 mmol 2,4,6-trimethylbenzenesulphonic acid, and

0.012 mmol 1,3-bis[bis(2-methoxyphenyl)phosphino]propane.

The pressure inside the autoclave was maintained by pressing in a 1:1 carbon monoxide/ethene mixture. After 2.5 hours, the polymerization was terminated by cooling the reaction mixture to room temperature and releasing the pressure. The copolymer was filtered off, washed with methanol and dried at 70°C.

The yield was 10.4 g of copolymer. The polymerization rate was 3.9 kg copolymer/g palladium.hour. The copolymer had an LVN of 1.7 dl/g.

## Example 8

A carbon monoxide/ethene copolymer was prepared substantially in the same way as the copolymer of Example 7, except that the catalyst solution contained 0.021 mmol of 2,4,5-trichlorobenzenesulphonic acid instead of 0.027 mmol of 2,4,6-trimethylbenzenesulphonic acid.

The yield was 8.7 g of copolymer. The polymerization rate was 3.2 kg copolymer/g palladium.hour. The copolymer had an LVN of 1.3 dl/g.

## Example 9

A carbon monoxide/ethene copolymer was prepared substantially in the same way as the copolymer of Example 7, except for the following differences

a) the catalyst solution contained 0.020 mmol of trifluoromethanesulphonic acid instead of 0.027 mmol of 2,4,6-trimethylbenzenesulphonic acid, and

b) the reaction time was 3 hours instead of 2.5 hours.

The yield was 13.8 g of copolymer. The polymerization rate was 4.2 kg copolymer/g palladium.hour. The copolymer had an LVN of 1.4 dl/g.

## Example 10

A carbon monoxide/ethene copolymer was prepared sub- stantially in the same way as the copolymer of Example 7, except for the following differences

a) the catalyst solution contained 0.02 mmol of sulphuric acid instead of 0.027 mmol of 2,4,6-trimethylbenzenesulphonic acid, and

b) the reaction time was 3 hours instead of 2.5 hours.

The yield was 8.4 g of copolymer. The polymerization rate was 2.8 kg copolymer/g palladium.hour. The copolymer had an LVN of 1.5 dl/g.

Example 11

A carbon monoxide/ethene copolymer was prepared substantially in the same way as the copolymer of Example 7, except for the following differences
  a) the catalyst solution contained 0.06 mmol of 2,6-dihydroxybenzoic acid instead of 0.027 mmol of 2,4,6-trimethylbenzenesulphonic acid, and
  b) the reaction time was 1.5 hour instead of 2.5 hours.

The yield was 4.7 g of copolymer. The polymerization rate was 3.1 kg copolymer/g palladium.hour. The copolymer had an LVN of 0.2 dl/g.

Example 12

A carbon monoxide/ethene copolymer was prepared substantially in the same way as the copolymer of Example 7, except that a catalyst solution was introduced into the autoclave which comprised
23.5 ml methanol,
1.5 ml toluene,
0.0025 mmol palladium acetate,
0.05 mmol perchloric acid(taken up as a 70 %w solution in water), and
0.0030 mmol 1,3-bis[bis(2-methoxyphenyl)phosphino]propane.
  The yield was 12.4 g of copolymer. The polymerization rate was 18.5 kg copolymer/g palladium.hour. The copolymer had an LVN of 2.8 dl/g.

Example 13

A carbon monoxide/ethene copolymer was prepared substantially in the same way as the copolymer of Example 7, except for the following differences
  a) a catalyst solution was introduced into the autoclave which comprised
23.5 ml methanol,
1.5 ml toluene,
0.0025 mmol palladium acetate,
0.012 mmol perchloric acid (taken up as a 70 %w solution in water), and
0.0030 mmol 1,3-bis[bis(2-methoxyphenyl)phosphino]propane,
  b) the reaction time was 1.5 hour instead of 2.5 hours.

The yield was 6.3 g of copolymer. The polymerization rate was 15.7 kg copolymer/g palladium.hour. The copolymer had an LVN of 2.1 dl/g.

Example 14

A carbon monoxide/ethene copolymer was prepared substantially in the same way as the copolymer of Example 7, except that a catalyst solution was introduced into the autoclave which comprised
23.5 ml methanol,
1.5 ml toluene,
0.01 mmol palladium acetate,
0.02 mmol perchloric acid (taken up as a 70 %w solution in water), and
0.012 mmol 1,3-bis[bis(2-methoxyphenyl)phosphino]propane.
  The yield was 21.1 g of copolymer. The polymerization rate was 7.9 kg copolymer/g palladium.hour. The copolymer had an LVN of 1.3 dl/g.

Example 15

A carbon monoxide/ethene copolymer was prepared substantially in the same way as the copolymer of Example 7, except for the following differences
a) a catalyst solution was introduced into the autoclave which comprised
23.5 ml methanol,
1.5 ml toluene,
0.01 mmol palladium acetate,
0.011 mmol methanedisulphonic acid, and
0.012 mmol 1,3-bis[bis(2-methoxyphenyl)phosphino]propane, and
b) the reaction time was 6 hours instead of 2.5 hours.

The yield was 12.6 g of copolymer. The polymerization rate was 5.4 kg copolymer/g palladium.hour. The copolymer had an LVN of 3.0 dl/g.

Example 16

A carbon monoxide/ethene copolymer was prepared substantially in the same way as the copolymer of Example 7, except for the following differences
a) a catalyst solution was introduced into the autoclave which comprised
23.5 ml methanol,
1.5 ml toluene,
0.01 mmol palladium acetate,
0.027 mmol sulphoacetic acid, and
0.012 mmol 1,3-bis[bis(2-methoxyphenyl)phosphino]propane, and
b) the reaction time was 5 hours instead of 2.5 hours. The yield was 21.9 g of copolymer. The polymerization rate was 4.1 kg copolymer/g palladium.hour. The copolymer had an LVN of 2.1 dl/g.

Example 17

A carbon monoxide/ethene copolymer was prepared substantially in the same way as the copolymer of Example 1, except that such quantities of ethene and carbon monoxide were pressed into the autoclave that the ethene partial pressure was 33.5 bar, and the carbon monoxide partial pressure was 6.5 bar.
The yield was 13.4 g of copolymer. The polymerization rate was 7.1 kg copolymer/g palladium.hour. The copolymer had an LVN of 0.7 dl/g.

Example 18

A carbon monoxide/ethene copolymer was prepared substantially in the same way as the copolymer of Example 1, except for the following differences
a) such quantities of ethene and carbon monoxide were pressed into the autoclave that the ethene partial pressure was 13 bar and the carbon monoxide partial pressure was 27 bar, and
b) the reaction time was 10 hours instead of 2 hours.

The yield was 19.8 g of copolymer. The polymerization rate was 2.1 kg copolymer/g palladium.hour. The copolymer had an LVN of 1.2 dl/g.

Example 19

A carbon monoxide/ethene copolymer was prepared substantially in the same way as the copolymer of Example 1, except for the following differences
a) the reaction temperature was 75° C instead of 85° C,

b) such quantities of ethene and carbon monoxide were pressed into the autoclave that the ethene partial pressure was 33.5 bar and the carbon monoxide partial pressure was 6.5 bar, and

c) the reaction time was 3 hours instead of 2 hours.

The yield was 18.6 g of copolymer. The polymerization rate was 6.2 kg copolymer/g palladium.hour. The copolymer had an LVN of 1.5 dl/g.

Example 20

A carbon monoxide/ethene copolymer was prepared substantially in the same way as the copolymer of Example 1, except for the following differences

a) the reaction temperature was 75°C instead of 85°C,

b) such quantities of ethene and carbon monoxide were pressed into the autoclave that the ethene partial pressure was 13 bar and the carbon monoxide partial pressure was 27 bar, and

c) the reaction time was 10 hours instead of 2 hours.

The yield was 10.4 g of copolymer. The polymerization rate was 1.1 kg copolymer/g palladium.hour. The copolymer had an LVN of 2.5 dl/g.

Example 21

A carbon monoxide/ethene/propene terpolymer was prepared substantially in the same way as the copolymer of Example 1, except for the following differences

a) the autoclave was charged with 125 ml instead of 150 ml of methanol,

b) such quantities of ethene, propene and carbon.monoxide were pressed into the autoclave that the ethene partial pressure was 28.5 bar, the propene partial pressure was 18.5 bar and the carbon monoxide partial pressure was 9 bar, and

c) the reaction time was 10 hours instead of 2 hours.

The yield was 10.4 g of terpolymer. The polymerization rate was 1.1 kg terpolymer/g palladium.hour. The terpolymer had an LVN of 0.4 dl/g.

Example 22

A carbon monoxide/ethene/propene terpolymer was prepared substantially in the same way as the copolymer of Example 1, except for the following differences

a) such quantities of ethene, propene and carbon monoxide were pressed into the autoclave that the ethene partial pressure was 15 bar, the propene partial pressure was 10 bar and the carbon monoxide partial pressure was 31 bar, and

b) the reaction time was 5 hours instead of 2 hours.

The yield was 18.4 g of terpolymer. The polymerization rate was 3.9 kg terpolymer/g palladium.hour. The terpolymer had an LVN of 0.9 dl/g.

Example 23

A carbon monoxide/ethene/propene terpolymer was prepared substantially in the same way as the copolymer of Example 1, except for the following differences

a) the autoclave was charged with 125 ml instead of 150 ml of methanol,

b) the reaction temperature was 75°C instead of 85°C,

c) such quantities of ethene, propene and carbon monoxide were pressed into the autoclave that the ethene partial pressure was 40 bar, the propene partial pressure was 27 bar and the carbon monoxide partial pressure was 13 bar, and

d) the reaction time was 5 hours instead of 2 hours.

The yield was 14.6 g of terpolymer. The polymerization rate was 3.1 kg terpolymer/g palladium.hour. The terpolymer had an LVN of 1.4 dl/g.

## Example 24

A carbon monoxide/ethene/propene terpolymer was prepared substantially in the same way as the copolymer of Example 1, except for the following differences

a) the reaction temperature was 75°C instead of 85°C,

b) such quantities of ethene, propene and carbon monoxide were pressed into the autoclave that the ethene partial pressure was 16 bar, the propene partial pressure was 10 bar and the carbon monoxide partial pressure was 54 bar, and

c) the reaction time was 7 hours instead of 2 hours.

The yield was 19.8 g of terpolymer. The polymerization rate was 3.0 kg terpolymer/g palladium.hour. The terpolymer had an LVN of 1.8 dl/g.

Of Examples 1-24, Examples 1-16 are examples in accordance with the invention. In these examples, carbon monoxide/ethene copolymers and carbon monoxide/ethene/propene terpolymers were prepared at overall pressures in the range of from 40 to 80, and olefin/carbon monoxide partial pressure ratios of from 1 to 4.

Examples 17-24 fall outside the scope of the invention and have been included in the patent application for comparison. In these examples, the carbon monoxide/ethene copolymers and carbon monoxide/ethene/propene terpolymers were prepared at olefin/carbon monoxide partial pressure ratios of less than 1 or more than 4.

With the aid of $^{13}$C-NMR analysis it was established that the carbon monoxide/ethene copolymers prepared by Examples 1-4 and 7-20 had a linear alternating structure and that therefore they consisted of units of the formula $-(CO)-(C_2H_4)-$. With the aid of $^{13}$C-NMR analysis it was also established that the carbon monoxide/ethene/propene terpolymers prepared by Examples 5, 6 and 21-24 had a linear structure and that therefore they consisted of units of the formula $-(CO)-(C_2H_4)-$ and units of the formula $-(CO)-(C_3H_6)-$, which units occurred randomly distributed within the terpolymers.

The favourable effect which the execution of the polymerization at an olefin/carbon monoxide partial pressure ratio of from 1 to 4 has both on polymerization rates and on molecular weights is clearly demonstrated by the comparison of the results listed in the table following. This effect is felt in the preparation both of copolymers and of terpolymers, and when carrying out the polymerization both at pressures above 75 bar and at pressures below 75 bar.

The latter is surprising, for the examples given in Applicant's earlier EP-246674 indicated that only at high overall pressures, e.g. 150 bar, the olefin/CO ratio had any influence on the reaction.

Table

| Example No. | Polymer type | Polymerization conditions | | | Polymerization rate, g pol/g Pd.h | LVN, dl/g |
|---|---|---|---|---|---|---|
| | | Temperature, °C | Overall pressure, bar | Olefin/CO partial pressure ratio | | |
| 1 | $CO/C_2^=$ | 85 | 40 | 2.5 | 10.2 | 1.5 |
| 17 | $CO/C_2^=$ | 85 | 40 | 5.2 | 7.1 | 0.7 |
| 18 | $CO/C_2^=$ | 85 | 40 | 0.5 | 2.1 | 1.2 |
| 2 | $CO/C_2^=$ | 75 | 40 | 2.5 | 8.3 | 3.0 |
| 19 | $CO/C_2^=$ | 75 | 40 | 5.2 | 6.2 | 1.5 |
| 20 | $CO/C_2^=$ | 75 | 40 | 0.5 | 1.1 | 2.5 |
| 5 | $CO/C_2^=/C_3^=$ | 85 | 56 | 1.5 | 6.2 | 1.1 |
| 21 | $CO/C_2^=/C_3^=$ | 85 | 56 | 5.2 | 1.1 | 0.4 |
| 22 | $CO/C_2^=/C_3^=$ | 85 | 56 | 0.8 | 3.9 | 0.9 |
| 6 | $CO/C_2^=/C_3^=$ | 75 | 80 | 2.5 | 5.5 | 2.6 |
| 23 | $CO/C_2^=/C_3^=$ | 75 | 80 | 5.2 | 3.1 | 1.4 |
| 24 | $CO/C_2^=/C_3^=$ | 75 | 80 | 0.5 | 3.0 | 1.8 |

**Claims**

1. Process for the preparation of polyketone polymers, wherein a mixture of carbon monoxide with one or more alpha-olefins is polymerized at an olefin/carbon monoxide partial pressure ratio of from 1 to 4, by using a catalyst composition on the basis of

a) a palladium compound,

b) an anion of an acid with a pKa of less than 6, and

c) a phosphorus bidentate ligand of the general formula $R^1R^2P-R-PR^3R^4$, wherein $R^1$, $R^2$, $R^3$ and $R^4$ represent the same or different polar-substituted aryl groups, and R represents a bivalent organic bridging group containing three atoms in the bridge at least two of which are carbon atoms, characterized in that each of the aryl groups $R^1$ to $R^4$ contains at least one polar substituent in a position ortho to the phosphorus atom bound to the aryl group concerned, and in that the polymerization is carried out at an olefin/carbon monoxide partial pressure ratio of from 1 to 4, wherein the subject matter of EP-246674 is disclaimed.

2. A process as claimed in claim 1, characterized in that it is carried out at an overall pressure of from 30 to 100 bar.

3. A process as claimed in claim 1 or 2, characterized in that it is carried out at an olefin/carbon monoxide partial pressure ratio of from 1.5 to 3.5.

4. A process as claimed in one or more of claims 1-3, characterized in that the catalyst composition contains as component c) a bisphosphine in which the groups $R^1$, $R^2$, $R^3$ and $R^4$ represent polar-substituted phenyl groups.

5. A process as claimed in one or more of claims 1-4, characterized in that the catalyst composition contains as component c) a bisphosphine in which the groups $R^1$, $R^2$, $R^3$ and $R^4$ are the same.

6. A process as claimed in one or more of claims 1-5, characterized in that the catalyst composition contains as component c) a bisphosphine in which the polar groups are alkoxy groups, such as methoxy groups.

7. A process as claimed in claims 4, 5 and 6, characterized in that the catalyst composition contains 1,3-bis[bis(2-methoxyphenyl)phosphino]propane as component c).

8. A process as claimed in one or more of claims 1-7, characterized in that component c) is present in the catalyst composition in a quantity of from 0.5 to 5 mol per gram atom of palladium.

9. Novel catalyst compositions, characterized in that they are based upon

a) a palladium compound,

b) an anion of an acid chosen from the group made up of 2,4,6-trimethylbenzenesulphonic acid, 2,4,5-trichlorobenzene sulphonic acid, 2,6-dihydroxybenzoic acid, methanedisulphonic acid and sulphoacetic acid, and

c) a phosphorus bidentate ligand as defined in claim 1 under c).

10. A catalyst composition as claimed in claim 9, characterized in that component a) is palladium acetate and component c) is 1,3-bis[bis(2-methoxyphenyl)phosphino]propane.